(19) Europäisches Patentamt
European Patent Office
Office européen des brevets

(11) **EP 4 618 618 A1**

(12) **EUROPEAN PATENT APPLICATION**
published in accordance with Art. 153(4) EPC

(43) Date of publication:
**17.09.2025 Bulletin 2025/38**

(21) Application number: **23887876.3**

(22) Date of filing: **31.10.2023**

(51) International Patent Classification (IPC):
**H04W 28/16** *(2009.01)*

(52) Cooperative Patent Classification (CPC):
**H04W 28/16; H04W 72/53**

(86) International application number:
**PCT/CN2023/128625**

(87) International publication number:
**WO 2024/099186 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2022 CN 202211392748**

(71) Applicant: **Vivo Mobile Communication Co., Ltd.
Dongguan, Guangdong 523863 (CN)**

(72) Inventors:
• **YUAN, Jiangwei
Dongguan, Guangdong 523863 (CN)**
• **WU, Hao
Dongguan, Guangdong 523863 (CN)**

(74) Representative: **Walaski, Jan Filip et al
Venner Shipley LLP
200 Aldersgate
London EC1A 4HD (GB)**

(54) **TERMINAL RESOURCE OCCUPANCY DETERMINATION METHOD, COMMUNICATION DEVICE, AND STORAGE MEDIUM**

(57) The present application belongs to the field of wireless communications. Disclosed are a terminal resource occupancy determination method, a communication device, and a storage medium. The terminal resource occupancy determination method in the embodiments of the present application comprises: according to a target rule related to target configuration information, a communication device determines the resource occupancy of a terminal, wherein the target configuration information comprises at least one of the following: the channel state information (CSI) prediction feedback configuration of the terminal, and the time-domain CSI feedback configuration of the terminal, and the target rule comprising at least one of the following: a CSI processing unit (CPU) counting rule, a rule of CPU occupancy time, an active resource counting rule, and an active port counting rule.

200

S210

A communication device determines terminal resource occupation according to a target rule related to target configuration information

FIG. 2

EP 4 618 618 A1

**Description**

**CROSS-REFERENCE TO RELATED APPLICATIONS**

This application claims priority to Chinese Patent Application No. 202211392748.1, filed with the China National Intellectual Property Administration on November 8, 2022 and entitled "METHOD FOR DETERMINING TERMINAL RESOURCE OCCUPATION, COMMUNICATION DEVICE, AND STORAGE MEDIUM", which is incorporated herein by reference in its entirety.

**TECHNICAL FIELD**

This application pertains to the field of wireless communication technologies, and specifically relates to a method for determining terminal resource occupation, a communication device, and a storage medium.

**BACKGROUND**

In the related art, high-speed channel state information (Channel State Information, CSI) enhancement has been adopted, and there exist two primary enhanced schemes: (1) A terminal feeds back precoding matrix indicators (Precoding matrix indicator, PMI) measured across a plurality of time-domain units, and a network predicts PMIs of future time-domain units based on the PMIs of the plurality of time-domain units; and (2) the terminal predicts a channel of a certain or some future time-domain units based on a channel at a plurality of moments, and calculates a corresponding PMI and feeds it back.

In order for the network to understand the situation of available terminal resources at a specific moment and avoid the measurement failure caused by the lack of resources for the measurement behavior triggered by the network, it is necessary to formulate a rule for occupation of terminal resources to determine the available resources for the terminal. However, in the related art, the rules for occupation of terminal resources (for example, CSI processing units (CSI processing unit, CPU), active resources, and active ports) are associated with a quantity of ports of measurement resources or a quantity of measurement resources. However, if the terminal resource occupation is determined only according to the quantity of ports of measurement resources or the quantity of measurement resources, there may be inaccurate estimation of the terminal resource occupation. For example, in a case that a capability of a terminal is overestimated, that is, compared with resources determined according to an occupation rule, the terminal may need more resources to obtain the predicted CSI or time-domain CSI.

**SUMMARY**

Embodiments of this application provide a method for determining terminal resource occupation, a communication device, and a storage medium, which can solve the problem that the estimation of terminal resource occupation may be inaccurate.

According to a first aspect, a method for determining terminal resource occupation is provided and includes: determining, by a communication device, terminal resource occupation according to a target rule related to target configuration information; where the target configuration information includes at least one of the following: a feedback configuration of the terminal for predicted channel state information CSI, and a feedback configuration of the terminal for time-domain CSI; and the target rule includes at least one of the following: a CSI processing unit CPU counting rule; a CPU occupancy time rule; an active resource counting rule; and an active port counting rule.

According to a second aspect, an apparatus for determining terminal resource occupation is provided and includes: an obtaining module, configured to obtain a target rule related to target configuration information; where the target configuration information includes at least one of the following: a feedback configuration of the terminal for predicted channel state information CSI, and a feedback configuration of the terminal for time-domain CSI; and a determining module, configured to determine resource occupation by the terminal according to the target rule related to the target configuration information, where the target rule includes at least one of the following: a CSI processing unit CPU counting rule; a CPU occupancy time rule; an active resource counting rule; and an active port counting rule.

According to a third aspect, a communication device is provided, where the communication device includes a processor and a memory, and the memory stores a program or instructions capable of running on the processor, and when the program or instructions are executed by the processor, the steps of the method according to the first aspect are implemented.

According to a fourth aspect, a terminal is provided and includes a processor and a communication interface, where the processor is configured to implement the steps of the method according to the first aspect, and the communication interface is configured to communicate with external devices.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided, where the chip includes a processor and a communication interface, where the communication interface is coupled to the processor, and the processor is configured to run a program or instructions to implement the steps of the method according to the first aspect.

According to a seventh aspect, this application provides a computer program/program product, where the computer program/program product is stored in a storage medium, the computer program/program product is executed by at least one processor to implement the steps of the method according to the first aspect.

In the embodiments of this application, a communication device (including a terminal or a network-side device) may determine terminal resource occupation according to a target rule (such as, one or more of a CPU counting rule, a CPU occupancy time rule, an active resource counting rule, and an active port counting rule) related to a feedback configuration of the terminal for predicted CSI or a feedback configuration of the terminal for time-domain CSI. To be specific, a resource occupation rule adopted by the communication device is related to the feedback configuration for CSI or the feedback configuration for time-domain CSI, and thus the predicted CSI feedback process or time-domain CSI feedback process is considered when determining the resource occupation by the terminal. This prevents inaccurate estimation of resource occupation by the terminal.

**BRIEF DESCRIPTION OF DRAWINGS**

FIG. 1 is a block diagram of a wireless communication system to which the embodiments of this application may be applied;

FIG. 2 is a schematic flowchart of a method for determining terminal resource occupation according to an embodiment of this application;

FIG. 3 is a schematic structural diagram of an apparatus for determining terminal resource occupation according to an embodiment of this application;

FIG. 4 is a schematic structural diagram of a communication device according to an embodiment of this application;

FIG. 5 is a schematic structural diagram of hardware of a terminal according to an embodiment of this application; and

FIG. 6 is a schematic structural diagram of hardware of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

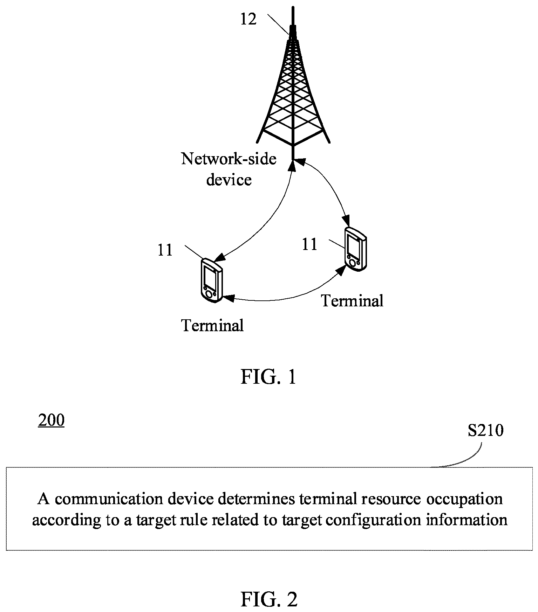

FIG. 1 is a block diagram of a wireless communication system to which the embodiments of this application are applied. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of this application do not impose any limitation on a specific type of the terminal 11. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, or a wireless fidelity (Wireless Fidelity, Wi-Fi) node. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited.

The following describes in detail a method for determining terminal resource occupation provided in the embodiments of this application using some embodiments and application scenarios thereof with reference to the accompanying drawings.

In the embodiments of this application, the capability of terminal (User Equipment, UE) to process CSI reports, that is, a quantity $N_{CPU}$ of simultaneous CSI calculations supported, must be reported to a network. If one UE supports $N_{CPU}$ simultaneous CSI calculations, this means the UE has $N_{CPU}$ CSI processing units (CSI processing unit, CPU) for processing CSI reports across all configured cells.

Available CPU quantity means that, in a certain orthogonal frequency-division multiplexing (Orthogonal frequency division multiplex, OFDM) symbol, if L CPUs have already been occupied for processing CSI reports, the UE still has $N_{CPU} - L$ available CPUs. If there are $N$ CSI reports to start occupying CPUs in this OFDM symbol, and the $n = 0, ..., N - 1$-th report requires to $O_{CPU}^{(n)}$ CPUs to be occupied, it is possible that a quantity of available CPUs is less than a quantity of CPUs required to be occupied by $N$ CSIs. In this case, the UE does not need to update $N - M$ CSI reports with lower priority, where $0 \leq M \leq N$ is the maximum that satisfies $\sum_{n=0}^{M-1} O_{CPU}^{(n)} \leq N_{CPU} - L$.

In the related art, the CPU occupation quantity $O_{CPU}$ for CSI reports is defined as shown in Table 1:

**Table 1**

| Report quantity (reportQuantity) | Others | $O_{CPU}$ |
|---|---|---|
| none (with trs-Info configured) | | 0 |
| cri-RSRP<br>ssb-Index-RSRP<br>cri-SINR<br>ssb-Index-SINR<br>none (without trs-Info) | - | 1 |
| cri-RI-PMI-CQI<br>cri-RI-i1<br>cri-RI-i1-CQI<br>cri-RI-CQI<br>cri-RI-LI-PMI-CQI | A-CSI, without (without, w/o)<br>UL-SCH or HARQ-ACK, L = 0 (no CPU occupation).<br><br>One wideband CSI (WB CSI), and ≤ 4 CSI-RS (CSI-RS) ports without CRI,<br><br>Type-I codebook, or cri-RI-CQI | $N_{CPU}$ |

(continued)

| Report quantity (reportQuantity) | Others | $O_{CPU}$ |
|---|---|---|
| | Other cases | $K_s$ |

$K_s$ is a quantity of CSI-RS resources (CSI-RS resource) included in the channel state information reference signal (CSI Reference Signal, CSI-RS) resource set (CSI-RS resource set) for channel measurement.

Regarding the CPU occupancy time, the start and end OFDM symbols during which the CSI reports occupy the CPUs may be as shown in Table 2.

**Table 2**

| | | Start symbol | End symbol |
|---|---|---|---|
| | P/SP CSI (except for Case 1) and the reportQuantity is not none. | The earliest symbol in the transmission occasion (occasion) of the CSI-RS/CSI-IM/SSB for the nearest channel or interference measurement before the corresponding CSI reference resource. | The last symbol of the PUSCH/PUCCH for transmission of CSI. |
| | A-CSI and Case 1, and the reportQuantity is not none. | The first one symbol after the PDCCH that triggers the CSI report. | The last symbol of the PUSCH for transmission of CSI. |
| | SP-CSI (except for Case 1), the reportQuantity is none and the trsInfor is not configured. | The earliest symbol of the transmission of the P/SP CSI-RS/SSB resource for the latest channel measurement used for L1-RSRP calculation. | $Z'_3$ symbols after the last symbol of the transmission of the CSI-RS/SSB resource for the latest channel measurement used for L1-RSRP calculation. |
| | AP-CSI, the reportQuantity is none and the trsInfor is not configured. | The first one symbol after the PDCCH that triggers the CSI report. | The last symbol between $Z_3$ symbols after the first one symbol behind this PDCCH and $Z'_3$ symbols after the last symbol of the transmission of the CSI-RS/SSB resource for the latest channel measurement used for L1-RSRP calculation. |

Case 1 refers to the first one transmission of PUSCH-based SP-CSI report activated by PDCCH.

In any slot, a quantity of active CSI-RS ports or active CSI-RS resources of UE in an active bandwidth part (Bandwidth Part, BWP) does not exceed the capability reported by the UE.

Non-zero power CSI-RS (Non-Zero Power CSI-RS, NZP CSI-RS) resources are in an active state within the following time periods:

In an aperiodic CSI-RS, they start from the end of a physical downlink control channel (Physical downlink control channel, PDCCH) containing a request and ends at the end of a physical uplink shared channel (Physical Uplink Shared Channel, PUSCH) associated with the aperiodic CSI-RS.

In a semi-persistent CSI-RS, they start from the end when the activation command is applied and ends at the end when the deactivation command is applied.

In a periodic CSI-RS, they start from the time when the periodic CSI-RS is configured by high-layer signaling and ends at the time when the periodic CSI-RS configuration is released.

If one CSI-RS resource is associated with one or more CSI report settings for N times, the CSI-RS resource and CSI-RS ports within the CSI-RS resource are counted N times.

In the related art, the occupation rules for CPUs, active resources, and active ports are related to a quantity of ports of measurement resources or a quantity of measurement resources, not but related to the predicted CSI or time-domain CSI feedback behavior; and the occupation duration of the CPUs is also not related to the predicted CSI or time-domain CSI feedback behavior. However, due to the relatively high computational complexity of the predicted CSI or time-domain CSI feedback process, ignoring the resource occupation determined by the predicted CSI or time-domain CSI feedback behaviors may result in overestimation of terminal resource occupation, meaning that, compared with terminal resource occupation determined using the relevant rules, the terminal may need more resources to obtain the predicted CSI or time-domain CSI. In view of the foregoing problems, an embodiment of this application provides a method for determining terminal resource occupation.

FIG. 2 is a schematic flowchart of a method for determining terminal resource occupation according to an embodiment of this application. The method 200 may be executed by a communication device. To be specific, the method may be performed by software or hardware installed on the communication device. As shown in FIG. 2, the method may include the following step.

S210: The communication device determines terminal resource occupation according to a target rule related to target configuration information.

In this embodiment of this application, the target configuration information includes at least one of the following: a feedback configuration of the terminal for predicted CSI, and a feedback configuration of the terminal for time-domain CSI, meaning that, in this embodiment of this application, the target rule is related to predicted CSI feedback or time-domain CSI feedback. For example, the target configuration information may include at least one of a configuration of a quantity of time-domain units for predicted CSI feedback or time-domain CSI feedback, a resource configuration associated with the CSI report setting, a channel configuration for triggering the report setting, and the like. The CSI report setting for predicted CSI feedback may be one network-configured CSI report setting that may be used to obtain the CSI at some future moments.

In this embodiment of this application, the resource occupation by the terminal includes but is not limited to obtaining predicted CSI or time-domain CSI by the terminal.

In this embodiment of this application, the target rule includes but is not limited to at least one of the following:

a CSI processing unit (CPU) counting rule;
a CPU occupancy time rule;
an active resource counting rule; and
an active port counting rule.

In this embodiment of this application, the communication device may be a terminal. After determining the resource occupation according to the method provided in this embodiment of this application, the terminal may determine, based on a resource occupation status, whether there are resources for calculating a new CSI report; if there are no such resources, a new CSI report may not be calculated. Alternatively, the communication device may be a network-side device. For example, after determining the terminal resource occupation according to the method provided in this embodiment of this application, the network-side device may determine, based on available resources fed back by the terminal and currently occupied resources, whether to add a new CSI report calculation or configure a higher-priority CSI report, so as to ensure that resources are available for calculation of the higher-priority report.

In a possible implementation, the CPU counting rule is related to a quantity (N4) of time-domain units, where the quantity (N4) of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal. For example, a quantity of time-domain units configured by a network is 5, but the terminal selects less than 5 from them. For example, if the terminal selects 4 time-domain units, the quantity N4 of time-domain units may be 4.

In a possible implementation, the CPU counting rule being related to a quantity of time-domain units includes at least one of the following: (1) to (3).

(1) For one CSI report setting for predicted CSI feedback or one CSI report setting for time-domain CSI feedback, a CPU occupation quantity is K1 times the quantity of time-domain units, where K1 is a rational number greater than 0.

In this embodiment of this application, the CSI report setting for predicted CSI feedback is a CSI report setting configured by the network, and this CSI report setting may be used to obtain the CSI at some future moments.

In the foregoing possible implementation, K1 may be determined based on a target value fed back by the terminal. For example, the terminal may feed back the value of K1 to the network-side device, where the target value may include one of the following: a quantity of CPUs required for obtaining CSIs in one time unit, a quantity of CPUs associated with one CSI-RS, and a quantity of CPUs associated with one time-domain unit.

For example, if one periodic CSI report setting for predicted CSI feedback or time-domain CSI feedback is associated with one periodic CSI-RS, and a quantity (N4) of time-domain units configured for reporting by the network is 4, a quantity of CPUs associated with this CSI report setting is 4, and in this case, K1=1. If the terminal feeds back that 2 CPUs are required to obtain the CSI of each time-domain unit, the quantity of CPUs associated with this CSI report setting is 8, and in this case, K1=2.

For another example, if one aperiodic CSI report setting for predicted CSI feedback or time-domain CSI feedback is associated with four aperiodic CSI-RSs, and a quantity (N4) of time-domain units configured for reporting by the network is 4, a quantity of CPUs associated with this CSI report setting is 4, and in this case, K1=1. If the terminal feeds back that 2 CPUs are required to obtain the CSI of each time-domain unit, the quantity of CPUs associated with this CSI report setting is 8, and in this case, K1=2.

(2) For one CSI report setting for predicted CSI feedback or one CSI report setting for time-domain CSI feedback, a CPU occupation quantity is a sum of K2 times the quantity of time-domain units and K3 times a quantity of channel state information reference signals (CSI-RS) associated with the CSI report setting, where K2 and K3 are both rational numbers greater than 0.

K2 may be the same as or different from K1. The embodiments of this application do not specifically limit thereto.

In this embodiment of this application, the CSI-RS may be a CSI-RS for channel measurement, or may be a CSI-RS for interference measurement, or may be a CSI-RS for other usages (usage).

K2 and K3 may be determined based on a target value fed back by the terminal; where the target value may include at least one of the following: a quantity of CPUs required to obtain CSIs in one time unit, a quantity of CPUs associated with one CSI-RS, and a quantity of CPUs associated with one time-domain unit. The terminal may feed back the target value, such that the network-side device may determine the values of K2 and K3. For example, the terminal feeds back a combination (K2,K3). Alternatively, the terminal may feed back K2 and K3 separately. For example, the terminal feeds back K2 to indicate the quantity associated with one time-domain unit, and feeds back K3 to indicate the quantity associated with one CSI-RS. For another example, the terminal may feed back a plurality of combinations, with each combination associated with a quantity of CSI reference signal ports, one K2, and/or one K3, and the network needs to determine K2 and/or K3 based on a quantity of configured measurement ports during quantity calculation.

For example, if one periodic CSI report setting for predicted CSI feedback or time-domain CSI feedback is associated with one periodic CSI-RS, and a quantity (N4) of time-domain units configured for reporting by the network is 4, a quantity of CPUs associated with this CSI report setting is 4+1=5, and in this case, K2=1 and K3=1.

For another example, if one aperiodic CSI report setting for predicted CSI feedback or time-domain CSI feedback is associated with four aperiodic CSI-RS, and a quantity (N4) of time-domain units configured for reporting by the network is 4, a quantity of CPUs associated with this CSI report setting is 4+4=8, and in this case, K2=1 and K3=1.

(3) For one CSI report setting for predicted CSI feedback or one CSI report setting for time-domain CSI feedback, a CPU occupation quantity is a maximum value between K4 times the quantity of time-domain units and K5 times the quantity of CSI-RSs associated with the CSI report setting, where K4 and K5 are both rational numbers greater than 0.

Optionally, K4 and K5 may be determined based on a target value fed back by the terminal; where the target value includes one of the following: a quantity of CPUs required to obtain CSIs in one time unit, a quantity of CPUs associated with one CSI-RS, and a quantity of CPUs associated with one time-domain unit. For example, the terminal feeds back a combination (K4,K5). Alternatively, the terminal may feed back K4 and K5 separately. For example, the terminal feeds back K4 to indicate the quantity associated with one time-domain unit, and feeds back K5 to indicate the quantity associated with one CSI-RS. For another example, the terminal may feed back a plurality of combinations, with each combination associated with a quantity of CSI reference signal ports, one K4, and/or one K5, and the network needs to determine K4 and/or K5 based on a quantity of configured measurement ports during quantity calculation.

In a possible implementation, the CPU occupancy time rule is related to a quantity of time-domain units, where a quantity (N4) of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal. The quantity N4 of time-domain units in this possible implementation is the same as the quantity N4 of time-domain units in the foregoing possible implementation, and for specific details, reference may be made to the description of the foregoing possible implementation.

In a possible implementation, the CPU occupancy time rule being related to a quantity of time-domain units includes at least one of the following (1) and (2).

(1) A CPU occupation start time of a first target CSI report setting is a target time, where the target time is the first one symbol of a measurement occasion of an earliest measurement signal among K6×N4 measurement occasions before a CSI reference resource associated with the first target CSI report setting, or a slot in which the measurement occasion of the earliest measurement signal is located; the first target CSI report setting includes a periodic CSI report setting or a semi-persistent CSI report setting; K6 is a rational number greater than 0, and N4 is a quantity of time-domain units associated with the first target CSI report setting.

In this possible implementation, for one periodic or semi-persistent CSI report setting, the CPU occupation start time associated with it is from the first one transmission symbol of the earliest occasion (occasion) of the CSI-RS/CSI interference measurement (CSI Interference Measurement, CSI-IM)/synchronization signal and PBCH block (Synchronization Signal and PBCH block, SSB) for channel measurement or interference measurement among the $K5 \times N4$ measurement occasions before the CSI reference resource associated with this CSI report setting, or from the slot in which the earliest occasion of the CSI-RS/CSI-IM/SSB for channel measurement or interference measurement is located.

K6 may be determined based on a value fed back by the terminal, meaning that the terminal may feed back a value to the network-side device, and the network-side device may determine the value of K6 based on this value.

For example, if one periodic CSI report setting for predicted CSI feedback or time-domain CSI feedback is associated with one CSI-RS for channel measurement with a period of 4, and a quantity (N4) of time-domain units configured for reporting by the network is 4, the terminal determines that the CSI reference resource is slot n according to the protocol agreement. Assuming that the latest previous transmission occasion of this CSI-RS before slot n is slot n+1, the CPU occupation start time associated with this CSI report setting is the first one transmission symbol of the transmission occasion associated with slot (n-1-4×N4). The position of the first one symbol is determined based on a start symbol of the CSI-RS configured by the network. K6=1.

(2) A CPU occupation end time associated with a second target CSI report setting is at least one of the following:

a first time associated with a first target symbol, where the first target symbol is a last symbol of a last time-domain unit among N4 time-domain units associated with the second target CSI report setting;
a maximum value of at least two of the first time, a second time, and a third time, where the second time is a time associated with a last symbol in which a measurement signal associated with the second target CSI report setting is located, and the third time is a time associated with a last symbol of a target physical channel for transmission of the second target CSI report setting; and
the second target CSI report setting includes any one of the following: a periodic CSI report setting, a semi-persistent CSI report setting, and an aperiodic CSI report setting.

In the foregoing possible implementation, for one CSI report setting (periodic or semi-persistent or aperiodic), the CPU occupation end time associated with it may be a time associated with the last symbol of the last time-domain unit among the N4 time-domain units associated with this CSI report setting.

For example, for one CSI report for predicted or time-domain CSI feedback, the terminal may be configured by default or instructed by the network to associate it with one or more CSI-RSs for channel measurement for monitoring the prediction performance. If this CSI report is associated with N4 time-domain units, where the associated slots are (slot n, slot n+1, slot n+2, slot n+3), and slot n is a slot for the CSI report feedback determined by the terminal according to the high-layer signaling, the CPU occupation end time associated with this CSI report is the last symbol of slot n+3.

Alternatively, for one CSI report setting (periodic or semi-persistent or aperiodic), the CPU occupancy end time associated with it may be a maximum value among a time T1 associated with the last symbol of the last time-domain unit among the N4 time-domain units associated with this CSI report setting, and/or a time T2 associated with the last symbol of the CSI-RS/CSI-IM/SSB associated with this CSI report setting for channel or interference measurement, and/or a time T3 associated with the last symbol of the PUSCH/physical uplink control channel (Physical Uplink Control Channel, PUCCH) for transmission of this CSI report setting.

In a possible implementation, the CPU occupancy time rule may be related to a CSI-RS parameter in the target configuration information.

Optionally, the CPU occupancy time rule being related to a CSI-RS parameter in the target configuration information may include at least one of the following:

(1) A CPU occupation end time associated with an aperiodic CSI report setting is a maximum value of the following two items: a time associated with a last symbol of a target physical channel for transmission of the aperiodic CSI report setting, and a time associated with a last symbol in which a CSI-RS associated with the aperiodic CSI report setting is located, for example, a maximum value between the time associated with the last symbol of the PUSCH/PUCCH for transmission of this CSI report setting and the time associated with the last symbol of the CSI-RS/CSI-IM/SSB associated with this CSI report setting for channel or interference measurement.

For example, if one aperiodic CSI report for predicted or time-domain CSI feedback is associated with six aperiodic CSI-RSs for channel measurement, where the associated slots are (slot n-6, slot n-5, slot n-4, slot n-3, slot n, slot n+1), and slot n is a slot for the CSI report feedback determined by the terminal according to high-layer signaling, the CPU occupation end time associated with this CSI report is the last symbol of the CSI-RS associated with slot n+1.

(2) A CPU occupation end time associated with a second target CSI report setting is a time associated with a second target symbol, where the second target symbol is a last symbol of a last transmission occasion among latest transmission occasions corresponding to a plurality of CSI-RS for channel measurement associated with the second target CSI report setting. The second target CSI report setting includes any one of the following: a periodic CSI report setting, a semi-persistent CSI report setting, and an aperiodic CSI report setting.

For example, for one CSI report setting (periodic or semi-persistent or aperiodic), the CPU occupation end time associated with it may be a time associated with the last symbol of the last transmission occasion among the latest transmission occasions corresponding to the plurality of CSI-RSs for channel measurement associated with this CSI report setting. The latest transmission occasion is a latest transmission occasion starting from the first one symbol after the channel carrying the activation or triggering of this CSI report setting.

For example, if the network activates one CSI report setting for training at the last symbol of slot n, where the CSI report setting is associated with four periodic CSI-RSs (with a period of 20 slots), and the latest transmission occasions corresponding to these four CSI-RSs are slot n+4, slot n+5, slot n+6, and slot n+7, the CPU occupation end time associated with this CSI report is the last symbol of the measurement occasion associated with slot n+7.

For another example, if the network activates one CSI report setting for training at the last symbol of slot n, where the CSI report setting is associated with four aperiodic CSI-RSs, and the latest transmission occasions corresponding to these four CSI-RSs are slot n+4, slot n+5, slot n+6, and slot n+7, the CPU occupation end time associated with this CSI report is the last symbol of the CSI-RS associated with slot n+7.

(3) A CPU occupation end time associated with a second target CSI report setting is a time associated with a third target symbol, where the third target symbol is a last symbol of the N-th transmission occasion of one periodic or semi-persistent CSI-RS for channel measurement associated with the second target CSI report setting, and N is an integer greater than 0; where the second target CSI report setting includes one of the following: a periodic CSI report setting, a semi-persistent CSI report setting, and an aperiodic CSI report setting.

For example, for one CSI report setting (periodic or semi-persistent or aperiodic), the CPU occupation end time associated with it may be a time associated with the last symbol of the N-th transmission occasion of the one periodic or semi-persistent CSI-RS for channel measurement associated with this CSI report setting. The first transmission occasion is a first transmission occasion starting from the first one symbol after the channel carrying the activation or triggering of this CSI report setting, and so on up to the N-th transmission occasion.

Optionally, N may be indicated by a network or be a value fed back by a terminal.

For example, if the network activates one CSI report setting for training at the last symbol of slot n, where the CSI report setting is associated with one periodic CSI-RS (with a period of four slots), and the latest transmission occasion of this CSI-RS is slot n+1, and the network instructs the terminal to use four measurement occasions for training, the CPU occupation end time associated with this CSI report is the last symbol of the measurement occasion associated with slot n+1+3 $\times$4=slot n+13.

In a possible implementation, the CPU occupancy time rule may be related to a physical layer channel triggering the CSI report setting configured by the target configuration information.

Optionally, the CPU occupancy time rule being related to the physical layer channel that triggers the CSI report setting configured in the target configuration information may include: a CPU occupancy time associated with a CSI report setting starts from a first symbol after a physical channel carrying activation or triggering signalling for the CSI report setting, and ends after a total of T4 symbols or slots, where T4 is an integer greater than 0.

For example, for a CSI report setting (periodic or semi-persistent or aperiodic), the CPU occupation end time associated with it may start from the first one symbol T3 after a physical channel carrying the activation or triggering of this CSI report setting, and end after T4 symbols or slots are accumulated.

For example, if the network activates one CSI report setting for training at the last symbol of slot n, where the CSI report setting is associated with one periodic CSI-RS (with a period of four slots), and the terminal obtains T4=140 symbols according to the protocol. Assuming that one slot corresponds to 14 symbols, the CPU occupation end time associated with this CSI report is the last symbol of slot n+10.

Optionally, T4 may be a value indicated by a network, or may be a value fed back by a terminal, or may be a value specified by the protocol.

In a possible implementation, the active resource counting rule is related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal. The quantity N4 of time-domain units is the same as the quantity N4 of time-domain units in the foregoing possible implementation, and for specific details, reference may be made to the foregoing relevant description.

In a possible implementation, the active resource counting rule being related to a quantity of time-domain units includes at least one of the following:

(1) In a case that a first CSI report setting is associated with one target CSI-RS, a count of active resources associated with the target CSI-RS is K7$\times$N4; where K7 is a rational number greater than 0, and N4 is a quantity of time-domain units associated with the first CSI report setting.

In this possible implementation, if one CSI report setting for predicted CSI feedback or time-domain CSI feedback is associated with one periodic or semi-persistent channel measurement resource (such as CSI-RS), the count of active resources associated with this measurement resource is $K7{\times}N4$ active resources.

Optionally, K7 may be determined based on a value fed back by the terminal, meaning that the terminal may feed back a value, and the network-side device may determine the value of K7 based on this value.

For example, if one periodic CSI report setting for predicted CSI feedback or time-domain CSI feedback is associated with one periodic CSI-RS, and a quantity (N4) of time-domain units configured for reporting by the network is 4, a quantity of active resources associated with this CSI report setting is 4, and in this case, K7=1.

(2) In a case that the first CSI report setting is associated with a plurality of target CSI-RSs, a count of active resources associated with each first CSI-RS in the plurality of target CSI-RSs is $K8{\times}N4$, and a count of active resources associated with each second CSI-RS in the plurality of first CSI-RSs is K9, where the first CSI-RS is a CSI-RS for obtaining predicted CSI, and the second CSI-RS is a CSI-RS for training a prediction algorithm or a prediction filter of the terminal; K8 and K9 are both rational numbers greater than 0, N4 is a quantity of time-domain units associated with the first CSI report setting, the first channel CSI-RS includes a periodic CSI-RS or a semi-persistent channel CSI-RS; and the first CIS report setting includes a CSI report setting for predicted CSI feedback or a CSI report setting for time-domain CSI feedback.

In this possible implementation, if one CSI report setting for predicted CSI feedback or time-domain CSI feedback is associated with a plurality of periodic or semi-persistent channel measurement resources (such as CSI-RSs), the count of active resources associated with each measurement resource used for obtaining predicted CSI in the plurality of measurement resources is $K8{\times}N4$ active resources, and the count of active resources associated with each resource used for terminal training in the plurality of measurement resources is K9 active resources.

Optionally, K8 and K9 may be determined based on values fed back by the terminal. K8 may be the same as or different from K7.

For example, if one periodic CSI report setting for predicted CSI feedback or time-domain CSI feedback is associated with two periodic CSI-RSs, one of which is used for prediction and the other is used for training a prediction filter of the terminal, and a quantity (N4) of time-domain units configured for reporting by the network is 4, a quantity of active resources associated with this CSI report setting is 8=4+4, and in this case, K8=1, and K9=4.

In a possible implementation, the active port counting rule may be related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal. The quantity of time-domain units is the same as the quantity of time-domain units in the foregoing possible implementation, and for specific details, reference may be made to the foregoing possible implementation.

In a possible implementation, the active port counting rule being related to a quantity of time-domain units may include at least one of the following (1) and (2).

(1) In a case that a first CSI report setting is associated with one target CSI-RS, the count of active ports associated with the target CSI-RS is $K10{\times}N4{\times}N\_p$, where N_p is a quantity of ports of the target CSI-RS, K10 is a rational number greater than 0, N4 is a quantity of time-domain units associated with the first CSI report setting, and the target CSI-RS includes a periodic CSI-RS or a semi-persistent channel CSI-RS.

In this possible implementation, if one CSI report setting for predicted CSI feedback or time-domain CSI feedback is associated with one periodic or semi-persistent channel measurement resource (such as CSI-RS), the count of active resources associated with this measurement resource is $K10{\times}N4{\times}N\_p$ active ports.

K10 may be determined based on a value fed back by the terminal. Optionally, K10 may be the same as or different from K7.

For example, if one periodic CSI report setting for predicted CSI feedback or time-domain CSI feedback is associated with one periodic CSI-RS with 16 ports, and a quantity (N4) of time-domain units configured for reporting by the network is 4, a quantity of active ports associated with this CSI report setting is $4{\times}16=64$, and in this case, K10=1.

(10) In a case that the first CSI report setting is associated with a plurality of target CSI-RSs, a count of active ports associated with each first CSI-RS in the plurality of target CSI-RSs is $K11{\times}N4{\times}N\_p1$, and a count of active resources associated with each second CSI-RS in the plurality of first CSI-RSs is $K12{\times}N\_p2$, where the first CSI-RS is a CSI-RS for obtaining predicted CSI, and the second CSI-RS is a CSI-RS for training CSI, N_p1 is a quantity of ports of the first channel measurement resource, and N_p2 is a quantity of ports of the second CSI-RS; K11 and K12 are both rational numbers greater than 0, N4 is the quantity of time-domain units associated with the first CSI report setting, the target CSI-RS includes a periodic CSI-RS or a semi-persistent channel CSI-RS; and the first CIS report setting includes a CSI report setting for predicted CSI feedback or a CSI report setting for time-domain CSI feedback.

In this possible implementation, if one CSI report setting for predicted CSI feedback or time-domain CSI feedback is associated with a plurality of periodic or semi-persistent channel measurement resources (such as CSI-RSs), the count of active resources associated with each measurement resource used for obtaining predicted CSI in the plurality of measurement resources is $K11 \times N4 \times N\_p1$ active ports, and the count of active resources associated with each resource used for terminal training in the plurality of measurement resources is $K12 \times N\_p2$ active resources.

K11 and K12 are rational numbers greater than 0; N_p1 represents a quantity of ports of the channel measurement resource used for prediction, and N_p2 represents a quantity of ports of the channel measurement resource used for training.

Optionally, K11 and K12 may be determined based on values fed back by the terminal.

It should be noted that K11 and K8 may be the same number. K12 and K9 may be the same number.

For example, if one periodic CSI report setting for predicted CSI feedback or time-domain CSI feedback is associated with two periodic CSI-RSs with 16 ports, one of which is used for prediction and the other is used for training a prediction filter of the terminal, and a quantity (N4) of time-domain units configured for reporting by the network is 4, a quantity of active resources associated with this CSI report setting is $8=4 \times 16+8 \times 16$, and in this case, K11=1, and K12=8.

Through the technical solution provided in this embodiment of this application, the occupation rules for terminal resources such as CPUs/active resources/active ports are provided, such that the occupation rules for terminal resources are related to the CSI predicted or time-domain CSI feedback behavior, thereby avoiding mismatches between the computational complexity of predicted CSI or time-domain CSI and occupied resources.

The method for determining terminal resource occupation according to this embodiment of this application may be executed by an apparatus for determining terminal resource occupation. In this embodiment of this application, assuming that the apparatus for determining terminal resource occupation performs the method for determining terminal resource occupation, the apparatus for determining terminal resource occupation provided in this embodiment of this application is described.

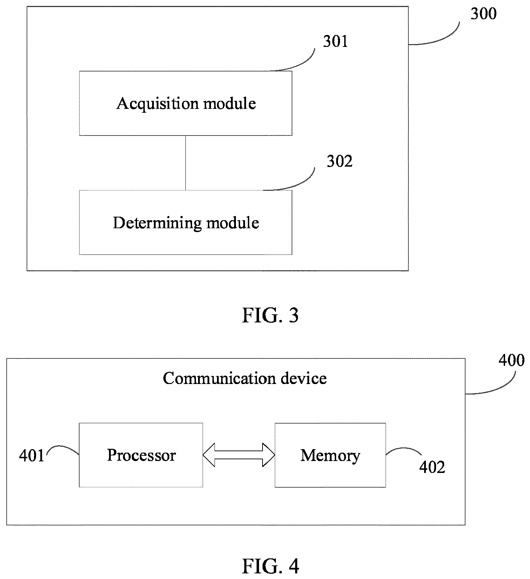

FIG. 3 is a schematic structural diagram of an apparatus for determining terminal resource occupation according to an embodiment of this application. As shown in FIG. 3, the apparatus 300 mainly includes: an obtaining module 301 and a determining module 302.

In this embodiment of this application, the obtaining module 301 is configured to obtain a target rule related to target configuration information; where the target configuration information includes at least one of the following: a feedback configuration of the terminal for predicted channel state information CSI, and a feedback configuration of the terminal for time-domain CSI; and the determining module 302 is configured to determine resource occupation by the terminal according to the target rule related to the target configuration information, where the target rule includes at least one of the following:

a CSI processing unit CPU counting rule;
a CPU occupancy time rule;
an active resource counting rule; and
an active port counting rule.

In a possible implementation, the CPU counting rule is related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

In a possible implementation, the CPU counting rule being related to a quantity of time-domain units includes at least one of the following:

for one CSI report setting for predicted CSI feedback or one CSI report setting for time-domain CSI feedback, a CPU occupation quantity is K1 times the quantity of time-domain units, where K1 is a rational number greater than 0;
for one CSI report setting for predicted CSI feedback or one CSI report setting for time-domain CSI feedback, a CPU occupation quantity is a sum of K2 times the quantity of time-domain units and K3 times a quantity of CSI-RSs associated with the CSI report setting, where K2 and K3 are both rational numbers greater than 0; and
for one CSI report setting for predicted CSI feedback or one CSI report setting for time-domain CSI feedback, a CPU occupation quantity is a maximum value between K4 times the quantity of time-domain units and K5 times the quantity of CSI-RSs associated with the CSI report setting, where K4 and K5 are both rational numbers greater than 0.

In a possible implementation, at least one of K1, K2, K3, K4, and K5 is determined based on a target value fed back by the terminal; where the target value includes at least one of the following: a quantity of CPUs required to obtain CSIs in one time unit, a quantity of CPUs associated with one CSI-RS, and a quantity of CPUs associated with one time-domain unit.

In a possible implementation, the CPU occupancy time rule is related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

In a possible implementation, the CPU occupancy time rule being related to a quantity of time-domain units includes at least one of the following:

a CPU occupation start time of a first target CSI report setting is a target time, where the target time is the first one symbol of a measurement occasion of an earliest measurement signal among K6×N4 measurement occasions before a CSI reference resource associated with the first target CSI report setting, or a slot in which the measurement occasion of the earliest measurement signal is located; the first target CSI report setting includes a periodic CSI report setting or a semi-persistent CSI report setting; K6 is a rational number greater than 0, and N4 is a quantity of time-domain units associated with the first target CSI report setting; and
a CPU occupation end time associated with a second target CSI report setting is at least one of the following:

a first time associated with a first target symbol, where the first target symbol is a last symbol of a last time-domain unit among N4 time-domain units associated with the second target CSI report setting;
a maximum value of at least two of the first time, a second time, and a third time, where the second time is a time associated with a last symbol in which a measurement signal associated with the second target CSI report setting is located, and the third time is a time associated with a last symbol of a target physical channel for transmission of the second target CSI report setting; and
the second target CSI report setting includes any one of the following: a periodic CSI report setting, a semi-persistent CSI report setting, and an aperiodic CSI report setting.

In a possible implementation, the CPU occupancy time rule is related to a CSI-RS parameter in the target configuration information.

In a possible implementation, the CPU occupancy time rule is related to a CSI-RS parameter in the target configuration information, and includes at least one of the following:

a CPU occupation end time associated with an aperiodic CSI report setting is a maximum value of the following two items: a time associated with a last symbol of a target physical channel for transmission of the aperiodic CSI report setting, and a time associated with a last symbol in which a CSI-RS associated with the aperiodic CSI report setting is located;
a CPU occupation end time associated with a second target CSI report setting is a time associated with a second target symbol, where the second target symbol is a last symbol of a last transmission occasion among latest transmission occasions corresponding to a plurality of CSI-RS for channel measurement associated with the second target CSI report setting; and
a CPU occupation end time associated with a second target CSI report setting is a time associated with a third target symbol, where the third target symbol is a last symbol of the N-th transmission occasion of one periodic or semi-persistent CSI-RS for channel measurement associated with the second target CSI report setting, and N is an integer greater than 0; where
the second target CSI report setting includes any one of the following: a periodic CSI report setting, a semi-persistent CSI report setting, and an aperiodic CSI report setting.

In a possible implementation, N is determined through network indication, or N is determined based on feedback from the terminal.

In a possible implementation, the CPU occupancy time rule is related to a physical layer channel triggering the CSI report setting configured by the target configuration information.

In a possible implementation, the CPU occupancy time rule being related to a physical layer channel triggering the CSI report setting configured by the target configuration information includes:
a CPU occupancy time associated with a CSI report setting starts from a first symbol after a physical channel carrying activation or triggering signalling for the CSI report setting, and ends after a total of T4 symbols or slots, where T4 is an integer greater than 0.

In a possible implementation, T4 is determined based on any one of the following: network indication, feedback from the terminal, or protocol specification.

In a possible implementation, the active resource counting rule is related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

In a possible implementation, the active resource counting rule being related to a quantity of time-domain units includes at least one of the following:

in a case that a first CSI report setting is associated with one target CSI-RS, a count of active resources associated with the target CSI-RS is $K7 \times N4$; and

in a case that the first CSI report setting is associated with a plurality of target CSI-RSs, a count of active resources associated with each first CSI-RS in the plurality of target CSI-RSs is $K8 \times N4$, and a count of active resources associated with each second CSI-RS in the plurality of first CSI-RSs is K9, where the first CSI-RS is a CSI-RS for obtaining predicted CSI, and the second CSI-RS is a CSI-RS for training a prediction algorithm or a prediction filter of the terminal; where

K7, K8, and K9 are rational numbers greater than 0; N4 is a quantity of time-domain units associated with the first CSI report setting; the first channel CSI-RS includes a periodic CSI-RS or a semi-persistent CSI-RS; and the first CIS report setting includes a CSI report setting for predicted CSI feedback or a CSI report setting for time-domain CSI feedback.

In a possible implementation, the active port counting rule is related to a quantity of time-domain units, where the quantity of time-domain units includes one of the following: a target configuration parameter associated with the target configuration information and a target configuration parameter associated with a CSI report setting; where the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

In a possible implementation, the active port counting rule being related to a quantity of time-domain units includes at least one of the following:

in a case that a first CSI report setting is associated with one target CSI-RS, a count of active ports associated with the target CSI-RS is $K10 \times N4 \times N\_p$, where $N\_p$ is a quantity of ports of the target CSI-RS; and

in a case that the first CSI report setting is associated with a plurality of target CSI-RSs, a count of active ports associated with each first CSI-RS in the plurality of target CSI-RSs is $K11 \times N4 \times N\_p1$, and a count of active resources associated with each second CSI-RS in the plurality of first CSI-RSs is $K12 \times N\_p2$, where the first CSI-RS is a CSI-RS for obtaining predicted CSI, and the second CSI-RS is a CSI-RS for training CSI, $N\_p1$ is a quantity of ports of first channel measurement resources, and $N\_p2$ is a quantity of ports of the second CSI-RSs; where

K10, K11, and K12 are rational numbers greater than 0; N4 is a quantity of time-domain units associated with the first CSI report setting; the target CSI-RS includes a periodic CSI-RS or a semi-persistent CSI-RS; and the first CIS report setting includes a CSI report setting for predicted CSI feedback or a CSI report setting for time-domain CSI feedback.

The apparatus for determining terminal resource occupation in this embodiment of this application may be an electronic device, for example, an electronic device with an operating system, or may be a component in an electronic device, for example, an integrated circuit or a chip. The electronic device may be a terminal or may be another device except the terminal, for example, a network-side device. For example, the terminal may include but is not limited to the types of the terminal 11 listed above, and the another device may be a server, a network attached storage (Network Attached Storage, NAS), or the like, which are not specifically limited in the embodiments of this application.

The apparatus for determining terminal resource occupation provided in this embodiment of this application can implement the processes implemented by the method embodiment in FIG. 2, with the same technical effects achieved. To avoid repetition, details are not described herein again.

Optionally, as shown in FIG. 4, an embodiment of this application further provides a communication device 400, including a processor 401 and a memory 402, where the memory 402 stores a program or instructions capable of running on the processor 401. For example, when the communication device 400 is a terminal, the program or instructions are executed by the processor 401 to implement the steps of the foregoing embodiment of the method for determining terminal resource occupation described above, with the same technical effects achieved. In a case that the communication device 400 is a network-side device, when the program or instructions are executed by the processor 401, the processes of the foregoing embodiment of the method for determining terminal resource occupation are implemented, with the same beneficial effects achieved. To avoid repetition, details are not described herein again.

An embodiment of this application further provides a communication device, including a processor and a communication interface. The processor is configured to implement the steps of the embodiment of the method for determining terminal resource occupation described above, and the communication interface is configured to communicate with external devices. The communication device embodiment corresponds to the foregoing communication device method embodiment. All implementations in the foregoing method embodiment may be applicable to the communication device embodiment, with the same technical effect achieved.

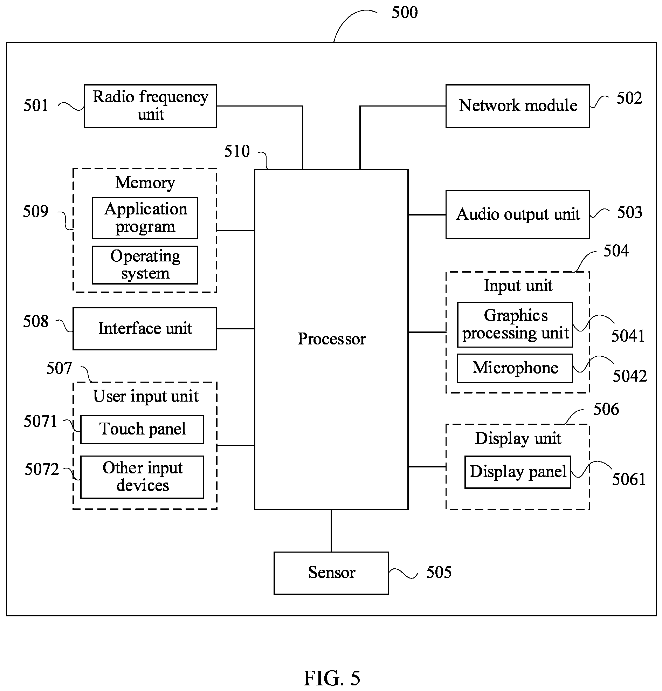

The communication device may be a terminal. Specifically, FIG. 5 is a schematic structural diagram of hardware of a terminal for implementing the embodiments of this application.

The terminal 500 includes, but is not limited to, at least some of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) for supplying power to the components. The power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061, and the display panel 5061 may be configured in a form of a liquid crystal display, an organic light-emitting diode, and the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 501 may transmit the downlink data to the processor 510 for processing. In addition, the radio frequency unit 501 may transmit uplink data to the network-side device. Generally, the radio frequency unit 501 includes but is not limited to an antenna, an amplifier, a transceiver, a coupler, a low noise amplifier, and a duplexer.

The memory 509 may be configured to store software programs or instructions and various data. The memory 509 may include first storage area for storing programs or instructions and a second storage area for storing data. The first storage area may store an operating system, an application program or instruction required by at least one function (for example, a sound playback function or an image playback function), and the like. In addition, the memory 509 may include either a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, an application processor and a modem processor are integrated in the processor 510. The application processor primarily processes operations relating to an operating system, user interfaces, application programs, and the like. The modem processor primarily processes radio communication signals, for example, being a baseband processor. It can be understood that the modem processor may alternatively be not integrated in the processor 510.

The processor 510 is configured to determine terminal resource occupation according to a target rule related to target configuration information; where

the target configuration information includes at least one of the following: a feedback configuration of the terminal for predicted channel state information CSI, and a feedback configuration of the terminal for time-domain CSI; and the target rule includes at least one of the following:

a CSI processing unit CPU counting rule;
a CPU occupancy time rule;
an active resource counting rule; and
an active port counting rule.

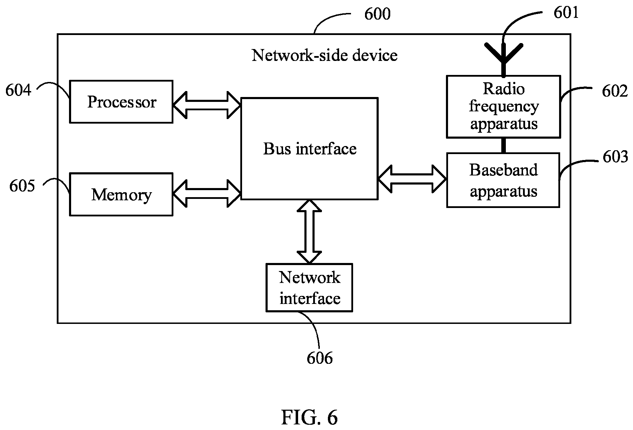

Optionally, the communication device may alternatively be a network-side device. Specifically, an embodiment of this application further provides a network-side device. As shown in FIG. 6, the network-side device 600 includes: an antenna 601, a radio frequency apparatus 602, a baseband apparatus 603, a processor 604, and a memory 605. The antenna 601 is connected to the radio frequency apparatus 602. In an uplink direction, the radio frequency apparatus 602 receives information through the antenna 601, and sends the received information to the baseband apparatus 603 for processing. In a downlink direction, the baseband apparatus 603 processes to-be-sent information, and sends the information to the radio frequency apparatus 602; and the radio frequency apparatus 602 processes the received information and then sends the information using the antenna 601.

The method performed by the network-side device in the foregoing embodiment may be implemented in the baseband apparatus 603, and the baseband apparatus 603 includes a baseband processor.

The baseband apparatus 603 may include, for example, at least one baseband board, where a plurality of chips are disposed on the baseband board. As shown in FIG. 6, one of the chips is, for example, the baseband processor, and connected to the memory 605 through a bus interface, to invoke the program in the memory 605 to perform the operations of the network device shown in the foregoing method embodiment.

The network-side device may further include a network interface 606, where the interface is, for example, a common public radio interface (common public radio interface, CPRI).

Specifically, the network-side device 600 in this embodiment of this application further includes: instructions or a program stored in the memory 605 and capable of running on the processor 604. The processor 604 invokes the instructions or program in the memory 605 to execute the method executed by the modules shown in FIG. 3, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiment of the method for determining terminal resource occupation are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement each process of the foregoing embodiment of the method for determining terminal resource occupation, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiment of the method for determining terminal resource occupation, with the same technical effects achieved. To avoid repetition, the details are not repeated herein.

An embodiment of this application further provides a system for determining terminal resource occupation, including a terminal and a network-side device, where the terminal may be configured to execute the steps of the method for determining terminal resource occupation as described above, and the network-side device may be configured to execute the steps of the method for determining terminal resource occupation as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for determining terminal resource occupation, comprising:

    determining, by a communication device, terminal resource occupation according to a target rule related to target configuration information; wherein
    the target configuration information comprises at least one of the following: a feedback configuration of the terminal for predicted channel state information CSI, and a feedback configuration of the terminal for time-domain CSI; and
    the target rule comprises at least one of the following:

    a CSI processing unit CPU counting rule;
    a CPU occupancy time rule;
    an active resource counting rule; and
    an active port counting rule.

2. The method according to claim 1, wherein the CPU counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

3. The method according to claim 2, wherein the CPU counting rule being related to a quantity of time-domain units comprises at least one of the following:

    for one CSI report setting for predicted CSI feedback or one CSI report setting for time-domain CSI feedback, the CPU occupation quantity is K1 times the quantity of time-domain units, wherein K1 is a rational number greater than 0;
    for one CSI report setting for predicted CSI feedback or one CSI report setting for time-domain CSI feedback, the CPU occupation quantity is a sum of K2 times the quantity of time-domain units and K3 times a quantity of channel state information reference signals CSI-RSs associated with the CSI report setting, wherein K2 and K3 are both rational numbers greater than 0; and
    for one CSI report setting for predicted CSI feedback or one CSI report setting for time-domain CSI feedback, the CPU occupation quantity is a maximum value between K4 times the quantity of time-domain units and K5 times the quantity of CSI-RSs associated with the CSI report setting, wherein K4 and K5 are both rational numbers greater than 0.

4. The method according to claim 3, wherein at least one of K1, K2, K3, K4, and K5 is determined based on a target value fed back by the terminal; wherein the target value comprises at least one of the following: a quantity of CPUs required to obtain CSIs in one time unit, a quantity of CPUs associated with one CSI-RS, and a quantity of CPUs associated with one time-domain unit.

5. The method according to claim 1, wherein the CPU occupancy time rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

6. The method according to claim 5, wherein the CPU occupancy time rule being related to a quantity of time-domain units comprises at least one of the following:

   a CPU occupation start time of a first target CSI report setting is a target time, wherein the target time is the first one symbol of a measurement occasion of an earliest measurement signal among $K6 \times N4$ measurement occasions before a CSI reference resource associated with the first target CSI report setting, or a slot in which the measurement occasion of the earliest measurement signal is located; the first target CSI report setting comprises a periodic CSI report setting or a semi-persistent CSI report setting; K6 is a rational number greater than 0, and N4 is a quantity of time-domain units associated with the first target CSI report setting; and
   a CPU occupation end time associated with a second target CSI report setting is at least one of the following:

      a first time associated with a first target symbol, wherein the first target symbol is a last symbol of a last time-domain unit among N4 time-domain units associated with the second target CSI report setting;
      a maximum value of at least two of the first time, a second time, and a third time, wherein the second time is a time associated with a last symbol in which a measurement signal associated with the second target CSI report setting is located, and the third time is a time associated with a last symbol of a target physical channel for transmission of the second target CSI report setting; and
      the second target CSI report setting comprises any one of the following: a periodic CSI report setting, a semi-persistent CSI report setting, and an aperiodic CSI report setting.

7. The method according to claim 1, wherein the CPU occupancy time rule is related to a CSI-RS parameter in the target configuration information.

8. The method according to claim 7, wherein the CPU occupancy time rule being related to a CSI-RS parameter in the target configuration information comprises at least one of the following:

      a CPU occupation end time associated with an aperiodic CSI report setting is a maximum value of the following two items: a time associated with a last symbol of a target physical channel for transmission of the aperiodic CSI report setting, and a time associated with a last symbol in which a CSI-RS associated with the aperiodic CSI report setting is located;
      a CPU occupation end time associated with a second target CSI report setting is a time associated with a second target symbol, wherein the second target symbol is a last symbol of a last transmission occasion among latest transmission occasions corresponding to a plurality of CSI-RSs for channel measurement associated with the second target CSI report setting; and
      a CPU occupation end time associated with a second target CSI report setting is a time associated with a third target symbol, wherein the third target symbol is a last symbol of the N-th transmission occasion of one periodic or semi-persistent CSI-RS for channel measurement associated with the second target CSI report setting, and N is an integer greater than 0; wherein
      the second target CSI report setting comprises any one of the following: a periodic CSI report setting, a semi-persistent CSI report setting, and an aperiodic CSI report setting.

9. The method according to claim 8, wherein N is determined through network indication, or N is determined based on feedback from the terminal.

10. The method according to claim 1, wherein the CPU occupancy time rule is related to a physical layer channel triggering the CSI report setting configured by the target configuration information.

**11.** The method according to claim 10, wherein the CPU occupancy time rule being related to a physical layer channel triggering the CSI report setting configured in the target configuration information comprises:
a CPU occupancy time associated with a CSI report setting starts from a first symbol after a physical channel carrying activation or triggering signalling for the CSI report setting, and ends after a total of T4 symbols or slots, wherein T4 is an integer greater than 0.

**12.** The method according to claim 11, wherein T4 is determined based on any one of the following: network indication, feedback from the terminal, or protocol specification.

**13.** The method according to claim 1, wherein the active resource counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

**14.** The method according to claim 13, wherein the active resource counting rule being related to a quantity of time-domain units comprises at least one of the following:

in a case that a first CSI report setting is associated with one target CSI-RS, a count of active resources associated with the target CSI-RS is $K7 \times N4$; and
in a case that the first CSI report setting is associated with a plurality of target CSI-RSs, a count of active resources associated with each first CSI-RS in the plurality of target CSI-RSs is $K8 \times N4$, and a count of active resources associated with each second CSI-RS in the plurality of first CSI-RSs is K9, wherein the first CSI-RS is a CSI-RS for obtaining predicted CSI, and the second CSI-RS is a CSI-RS for training a prediction algorithm or a prediction filter of the terminal; wherein
K7, K8, and K9 are rational numbers greater than 0; N4 is a quantity of time-domain units associated with the first CSI report setting; the first CSI-RS comprises a periodic CSI-RS or a semi-persistent CSI-RS; and the first CIS report setting comprises a CSI report setting for predicted CSI feedback or a CSI report setting for time-domain CSI feedback.

**15.** The method according to claim 1, wherein the active port counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

**16.** The method according to claim 15, wherein the active port counting rule being related to a quantity of time-domain units comprises at least one of the following:

in a case that a first CSI report setting is associated with one target CSI-RS, a count of active ports associated with the target CSI-RS is $K10 \times N4 \times N\_p$, wherein N_p is a quantity of ports of the target CSI-RS; and
in a case that the first CSI report setting is associated with a plurality of target CSI-RSs, a count of active ports associated with each first CSI-RS in the plurality of target CSI-RSs is $K11 \times N4 \times N\_p1$, and a count of active resources associated with each second CSI-RS in the plurality of first CSI-RSs is $K12 \times N\_p2$, wherein the first CSI-RS is a CSI-RS for obtaining predicted CSI, and the second CSI-RS is a CSI-RS for training CSI, N_p1 is a quantity of ports of first channel measurement resources, and N_p2 is a quantity of ports of the second CSI-RSs; wherein
K10, K11, and K12 are rational numbers greater than 0; N4 is a quantity of time-domain units associated with the first CSI report setting; the target CSI-RS comprises a periodic CSI-RS or a semi-persistent CSI-RS; and the first CIS report setting comprises a CSI report setting for predicted CSI feedback or a CSI report setting for time-domain CSI feedback.

**17.** An apparatus for determining terminal resource occupation, comprising:

an obtaining module, configured to obtain a target rule related to target configuration information, wherein the target configuration information comprises at least one of the following: a feedback configuration of the terminal for predicted channel state information CSI, and a feedback configuration of the terminal for time-domain CSI; and a determining module, configured to determine terminal resource occupation according to the target rule related to target configuration information; wherein the target rule comprises at least one of the following:

a CSI processing unit CPU counting rule;
a CPU occupancy time rule;
an active resource counting rule; and
an active port counting rule.

18. The apparatus according to claim 17, wherein the CPU counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

19. The apparatus according to claim 18, wherein the CPU counting rule being related to a quantity of time-domain units comprises at least one of the following:

for one CSI report setting for predicted CSI feedback or one CSI report setting for time-domain CSI feedback, the CPU occupation quantity is K1 times the quantity of time-domain units, wherein K1 is a rational number greater than 0;
for one CSI report setting for predicted CSI feedback or one CSI report setting for time-domain CSI feedback, the CPU occupation quantity is a sum of K2 times the quantity of time-domain units and K3 times a quantity of CSI-RSs associated with the CSI report setting, wherein K2 and K3 are both rational numbers greater than 0; and
for one CSI report setting for predicted CSI feedback or one CSI report setting for time-domain CSI feedback, the CPU occupation quantity is a maximum value between K4 times the quantity of time-domain units and K5 times the quantity of CSI-RSs associated with the CSI report setting, wherein K4 and K5 are both rational numbers greater than 0.

20. The apparatus according to claim 17, wherein at least one of K1, K2, K3, K4, and K5 is determined based on a target value fed back by the terminal; wherein the target value comprises at least one of the following: a quantity of CPUs required to obtain CSIs in one time unit, a quantity of CPUs associated with one CSI-RS, and a quantity of CPUs associated with one time-domain unit.

21. The apparatus according to claim 17, wherein the CPU occupancy time rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

22. The apparatus according to claim 21, wherein the CPU occupancy time rule being related to a quantity of time-domain units comprises at least one of the following:

a CPU occupation start time of a first target CSI report setting is a target time, wherein the target time is the first one symbol of a measurement occasion of an earliest measurement signal among K6×N4 measurement occasions before a CSI reference resource associated with the first target CSI report setting, or a slot in which the measurement occasion of the earliest measurement signal is located; the first target CSI report setting comprises a periodic CSI report setting or a semi-persistent CSI report setting; K6 is a rational number greater than 0, and N4 is a quantity of time-domain units associated with the first target CSI report setting; and
a CPU occupation end time associated with a second target CSI report setting is at least one of the following:

a first time associated with a first target symbol, wherein the first target symbol is a last symbol of a last time-domain unit among N4 time-domain units associated with the second target CSI report setting;

a maximum value of at least two of the first time, a second time, and a third time, wherein the second time is a time associated with a last symbol in which a measurement signal associated with the second target CSI report setting is located, and the third time is a time associated with a last symbol of a target physical channel for transmission of the second target CSI report setting; and

the second target CSI report setting comprises any one of the following: a periodic CSI report setting, a semi-persistent CSI report setting, and an aperiodic CSI report setting.

23. The apparatus according to claim 17, wherein the CPU occupancy time rule is related to a CSI-RS parameter in the target configuration information.

24. The apparatus according to claim 23, wherein the CPU occupancy time rule being related to a CSI-RS parameter in the target configuration information comprises at least one of the following:

a CPU occupation end time associated with an aperiodic CSI report setting is a maximum value of the following two items: a time associated with a last symbol of a target physical channel for transmission of the aperiodic CSI report setting, and a time associated with a last symbol in which a CSI-RS associated with the aperiodic CSI report setting is located;

a CPU occupation end time associated with a second target CSI report setting is a time associated with a second target symbol, wherein the second target symbol is a last symbol of a last transmission occasion among latest transmission occasions corresponding to a plurality of CSI-RSs for channel measurement associated with the second target CSI report setting; and

a CPU occupation end time associated with a second target CSI report setting is a time associated with a third target symbol, wherein the third target symbol is a last symbol of the N-th transmission occasion of one periodic or semi-persistent CSI-RS for channel measurement associated with the second target CSI report setting, and N is an integer greater than 0; wherein

the second target CSI report setting comprises any one of the following: a periodic CSI report setting, a semi-persistent CSI report setting, and an aperiodic CSI report setting.

25. The apparatus according to claim 24, wherein N is determined through network indication, or N is determined based on feedback from the terminal.

26. The apparatus according to claim 17, wherein the CPU occupancy time rule is related to a physical layer channel triggering the CSI report setting configured by the target configuration information.

27. The apparatus according to claim 26, wherein the CPU occupancy time rule being related to a physical layer channel triggering the CSI report setting configured by the target configuration information comprises:

a CPU occupancy time associated with a CSI report setting starts from a first symbol after a physical channel carrying activation or triggering signalling for the CSI report setting, and ends after a total of T4 symbols or slots, wherein T4 is an integer greater than 0.

28. The apparatus according to claim 27, wherein T4 is determined based on any one of the following: network indication, feedback from the terminal, or protocol specification.

29. The apparatus according to claim 17, wherein the active resource counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

30. The apparatus according to claim 29, wherein the active resource counting rule being related to a quantity of time-domain units comprises at least one of the following:

in a case that a first CSI report setting is associated with one target CSI-RS, a count of active resources associated with the target CSI-RS is $K7 \times N4$; and

in a case that the first CSI report setting is associated with a plurality of target CSI-RSs, a count of active resources associated with each first CSI-RS in the plurality of target CSI-RSs is K8×N4, and a count of active resources associated with all second CSI-RSs in the plurality of first CSI-RSs is K9, wherein the first CSI-RS is a CSI-RS for obtaining predicted CSI, and the second CSI-RS is a CSI-RS for training a prediction algorithm or a prediction filter of the terminal; wherein

K7, K8, and K9 are rational numbers greater than 0; N4 is a quantity of time-domain units associated with the first CSI report setting; the first CSI-RS comprises a periodic CSI-RS or a semi-persistent CSI-RS; and the first CIS report setting comprises a CSI report setting for predicted CSI feedback or a CSI report setting for time-domain CSI feedback.

31. The apparatus according to claim 17, wherein the active port counting rule is related to a quantity of time-domain units, wherein the quantity of time-domain units comprises one of the following: a target configuration parameter associated with the target configuration information and a target configuration parameter associated with a CSI report setting; wherein the CSI report setting is a CSI report setting associated with the target configuration information, and the target configuration parameter is used to indicate a quantity of time-domain units associated with feeding back or obtaining of a precoding matrix indicator PMI by the terminal, or a quantity of time-domain units associated with feeding back or obtaining of CSI by the terminal.

32. The apparatus according to claim 31, wherein the active port counting rule being related to a quantity of time-domain units comprises at least one of the following:

in a case that a first CSI report setting is associated with one target CSI-RS, a count of active ports associated with the target CSI-RS is K10×N4×N_p, wherein N_p is a quantity of ports of the target CSI-RS; and
in a case that the first CSI report setting is associated with a plurality of target CSI-RSs, a count of active ports associated with each first CSI-RS in the plurality of target CSI-RSs is K11×N4×N_p1, and a count of active resources associated with all second CSI-RSs in the plurality of first CSI-RSs is K12×N_p2, wherein the first CSI-RS is a CSI-RS for obtaining predicted CSI, and the second CSI-RS is a CSI-RS for training CSI, N_p1 is a quantity of ports of first channel measurement resources, and N_p2 is a quantity of ports of the second CSI-RSs; wherein K10, K11, and K12 are rational numbers greater than 0; N4 is a quantity of time-domain units associated with the first CSI report setting; the target CSI-RS comprises a periodic CSI-RS or a semi-persistent CSI-RS; and the first CIS report setting comprises a CSI report setting for predicted CSI feedback or a CSI report setting for time-domain CSI feedback.

33. A communication device, comprising a processor and a memory, wherein the memory stores a program or instructions capable of running on the processor, and when the program or the instructions are executed by the processor, the steps of the method for determining terminal resource occupation according to any one of claims 1 to 16 are implemented.

34. A readable storage medium, wherein the readable storage medium stores a program or instructions, and when the program or instructions are executed by a processor, the steps of the method for determining terminal resource occupation according to any one of claims 1 to 16 are implemented.

Network-side device

11

11

Terminal

Terminal

FIG. 1

200

S210

A communication device determines terminal resource occupation according to a target rule related to target configuration information

FIG. 2

300

301

Acquisition module

302

Determining module

FIG. 3

400

Communication device

401

Processor

Memory

402

FIG. 4

FIG. 5

EP 4 618 618 A1

FIG. 6

25

## INTERNATIONAL SEARCH REPORT

| International application No. |
|---|
| **PCT/CN2023/128625** |

| A. | CLASSIFICATION OF SUBJECT MATTER |
|---|---|

H04W 28/16(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 资源, 处理单元, 占用, 规则, 准则, 信道状态信息, 预测, 时域, 计数, resource?, CPU?, occup+, rule?, CSI, predict+, forecast+, time domain, count+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110971382 A (VIVO MOBILE COMMUNICATION CO., LTD.) 07 April 2020 (2020-04-07) <br> claims 1-46, and description, paragraphs 0047-0301 | 1-34 |
| A | CN 113517967 A (VIVO MOBILE COMMUNICATION CO., LTD.) 19 October 2021 (2021-10-19) <br> entire document | 1-34 |
| A | WO 2019216642 A1 (LG ELECTRONICS INC.) 14 November 2019 (2019-11-14) <br> entire document | 1-34 |
| A | LG ELECTRONICS. "Text Proposals on CSI Acquisition" <br> *3GPP TSG RAN WG1 Meeting #94bis, R1-1810252,* 12 October 2018 (2018-10-12), <br> entire document | 1-34 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2024** | **24 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/128625**

| Patent document cited in search report | | | Publication date (day/month/year) | Patent family member(s) | | | Publication date (day/month/year) |
|---|---|---|---|---|---|---|---|
| CN | 110971382 | A | 07 April 2020 | EP | 3860019 | A1 | 04 August 2021 |
| | | | | US | 2021218453 | A1 | 15 July 2021 |
| | | | | JP | 2022501967 | A | 06 January 2022 |
| | | | | KR | 20210065181 | A | 03 June 2021 |
| | | | | WO | 2020063211 | A1 | 02 April 2020 |
| CN | 113517967 | A | 19 October 2021 | WO | 2021204208 | A1 | 14 October 2021 |
| WO | 2019216642 | A1 | 14 November 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211392748